# EUROPEAN PATENT APPLICATION

(11) **EP 2 164 003 A1**
(43) Date of publication of application: **17.03.2010**
(21) Application number: 08425603.1
(22) Date of filing: 12.09.2008
(51) Int. Cl.: G06F 17/30, G08B 13/196, H04N 7/18

(54) **Distributed video surveillance system**

(71) Applicant: March Networks Corporation, Ottawa, Ontario K2K 2X3 (CA)
(72) Inventor: Colciago, Fabrizio, 20048 Carate Brianza (Milano) (IT)
(74) Representative: Petruzziello, Aldo

(57) **Abstract**

A video surveillance system and related architecture are provided. According to the architecture, a central server is not required, since server functionality is distributed in the system elements. A video camera arranged to capture video data includes a storage device handler configured to record the captured video data directly on a storage device. An indexer is arranged to query the storage devices in the system for new or modified video surveillance information and arranged to index the video surveillance information stored in the storage devices. Each element in the system, whether a camera, encoder, etc., can be viewed as a video surveillance host having at least one surveillance module. The hosts together form virtual network that can easily and unobtrusively be incorporated into an existing network infrastructure. This distributed approach eliminates the single point of failure.

## Description

### FIELD OF THE INVENTION

The present invention relates generally to video surveillance. More particularly, the present invention relates to video surveillance network architectures.

### BACKGROUND OF THE INVENTION

Video surveillance systems are used to keep watch over physical areas to assist in identifying events of interest. Such events, and associated data, can relate to maintaining safety and security, mitigating risk, increasing operational efficiency, preventing loss of products or revenue, gathering business intelligence, and a variety of other applications.

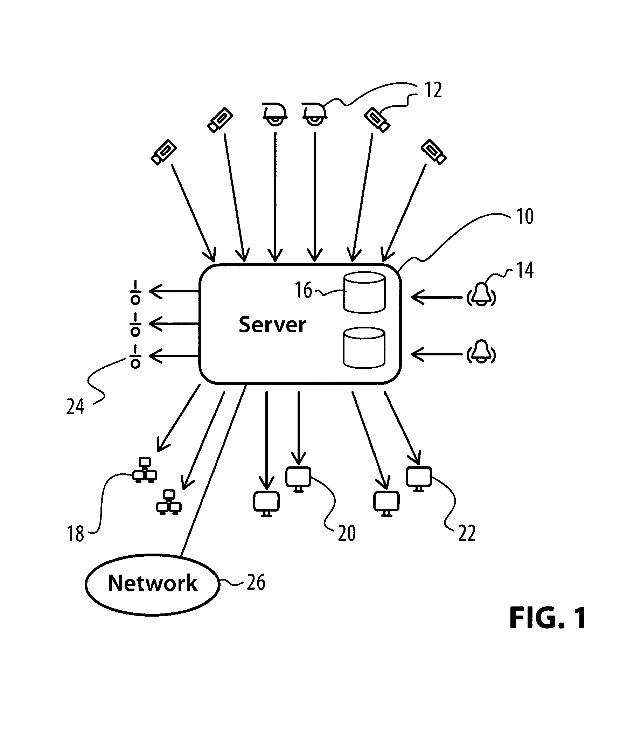

**FIG. 1** illustrates a server **10** at the center of a known video surveillance system architecture. The server can be a network video recorder (NVR). Various inputs and outputs are connected to the server. The inputs can include one or more cameras **12,** which can be analog cameras or IP (internet protocol) cameras, alarm inputs **14,** and one or more encoders (not shown). The server **10** includes at least one storage medium **16,** which can be locally connected or network connected, for storing video surveillance data. The outputs can include one or more monitors **18,** live clients **20,** playback clients **22,** and auxiliary outputs **24.**

A primary drawback of a server-centric system such as in **FIG. 1** is that any failure in the server brings the whole security system off-line. For example, if the server breaks down or malfunctions, the entire service is disabled. Some strategies can be put in place to avoid this. However, such strategies are not simple, particularly for analog systems using parallel servers in which one server is designated as a master if the other server goes down.

Integration of a server-centric system such as in **FIG. 1** with an existing infrastructure is limited to the network layer. If the video surveillance system is to be integrated into a third party architecture, the network layer is used for serial connection. For example, the server **10** can be implemented as a universal video management system (VMS), such as a digital VMS, and connected to the network **26.**

Load balancing policies are almost impossible to implement in a server-centric system. Because the server is at the center, the entire load is concentrated at the server. Such a system is also more vulnerable to external attacks, due to the reliance on the server.

It is becoming increasingly important to ensure that video surveillance architectures are compatible with existing network infrastructures. For example, when installing a video surveillance system at a bank, it is generally not acceptable to ask the bank to install a video surveillance company's own storage, since the bank has their own suppliers and requirements. Interoperability is important with respect to storage, security policies, and audit and error management.

It is, therefore, desirable to provide an improved video surveillance architecture and elements.

### SUMMARY OF THE INVENTION

It is an object of the present invention to obviate or mitigate at least one disadvantage of previous video surveillance architectures.

A video surveillance system according to an embodiment of the present invention is open and ready to interact with installed elements in a network with which the system is to be integrated.

In an aspect, the present invention provides a video surveillance system including at least one video camera arranged to capture video data, and an indexer. The video camera includes a storage device handler configured to record the captured video data directly on a storage device. The indexer is arranged to query the storage device for new or modified video surveillance information, and arranged to index the video surveillance information stored in the storage device. The system can include the storage device on which the at least one video stream source is configured to record video data. The video surveillance information comprises video, video information, meta data, or camera information.

The video surveillance system can include a plurality of video cameras. Each of the plurality of video cameras can include at least one video surveillance module. The video surveillance modules in the plurality of video cameras together form a distributed video surveillance server.

Each of the plurality of video cameras can include a private communications module facilitating communication between the plurality of video cameras over a private communications layer to form a virtual video surveillance network within a larger physical network. The larger physical network can be an existing network infrastructure with which the video surveillance system is to be integrated. Each of the plurality of video surveillance hosts can include a virtual network identifier. The private communications modules can address one another over the private communications layer using the virtual network identifiers.

The at least one video surveillance module can include a video surveillance module failure detector arranged to detect failure of an external video surveillance module within another video surveillance host.

The storage device handler can include storage device configuration settings. The storage device handler can include a storage failure detection module arranged to configure the at least one video camera to record captured video data to a secondary storage device in response to an indication that a default storage device has failed.

The system can further include a secondary indexer arranged to query the storage device for new or modified video surveillance information. The secondary indexer is arranged to index the video surveillance information stored in the storage device in response to an indication that the indexer has failed.

An archive interface can be arranged to provide access to stored video in the storage device. The archive interface can include a security policy module arranged to enforce security policies with respect to requests for stored video stored on the storage.

The system can further include: a proxy arranged to manage responses to requests for live and/or stored video, or a network interface in communication with and providing a single point of connection to at least one other video surveillance network.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
**FIG. 1** illustrates a server at the center of a known video surveillance system architecture.
**FIG. 2** illustrates a video surveillance system according to an embodiment of the present invention.
**FIG. 3** illustrates a simplified view of a video surveillance system showing an example of storage fault tolerance according to an embodiment of the present invention.
**FIG. 4** illustrates a block diagram of a video surveillance network according to an embodiment of the present invention.
**FIG. 5** illustrates a live view example according to an embodiment of the present invention.
**FIG. 6** illustrates a video playback example according to an embodiment of the present invention.
**FIG. 7** is a block diagram illustrating an architecture of a video surveillance network according to an embodiment of the present invention.
**FIG. 8** illustrates details of a video camera including a plurality of video surveillance modules according to an embodiment of the present invention.

### DETAILED DESCRIPTION

Generally, the present invention provides a video surveillance system and related architecture. According to the architecture, a central server is not required, since server functionality is distributed in the system elements. A video camera arranged to capture video data includes a storage device handler configured to record the captured video data directly on a storage device. An indexer is arranged to query the storage devices in the system for new or modified video surveillance information and arranged to index the video surveillance information stored in the storage devices. Each element in the system, whether a camera, encoder, etc., can be viewed as a video surveillance host having at least one surveillance module. The hosts together form virtual network that can easily and unobtrusively be incorporated into an existing network infrastructure. This distributed approach eliminates the single point of failure.

An embodiment of the present invention provides a server-less approach to video surveillance systems, in that it does not use a central server. This approach eliminates the single point of failure, so that the system is up and running, without implementing special policies, even if part of the system breaks. The system is redundant by design, not by introducing redundancy as a failsafe.

A video surveillance system according to an embodiment of the present invention comprises a network, or virtual network, of simple and independent edge devices, which are easy to manage and easy to replicate. This means that the complexity of the system does not change, regardless of whether there are 2 cameras or 2000 cameras, or more. The network infrastructure provides the rest of the functionality.

According to an embodiment of the present invention, the server, or certain server functionality, can be replicated in one or more edge devices, for example in all edge devices. In this way, any edge device knows on its own what to do and how to do it. The server in a video surveillance system according to an embodiment of the present invention is therefore not a centralized server, but a distributed server that is distributed over many edge devices.

A surveillance or security system according to his approach is no longer considered to be a closed system. It is an open environment comprising many stand-alone devices. With this architecture, there are no limits on the number of cameras. This is similar to the Internet architecture with respect to its inherent redundancy.

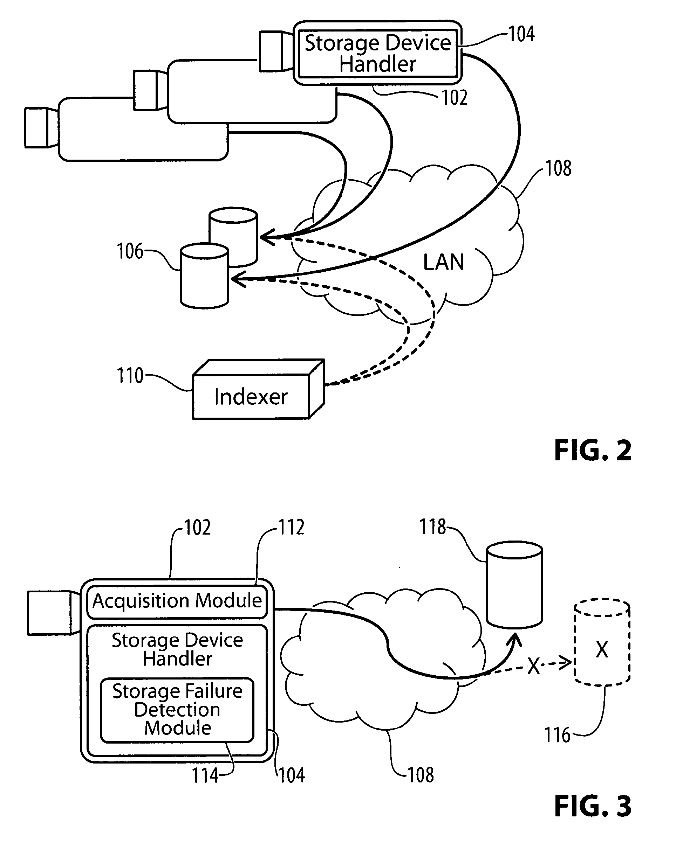

**FIG. 2** illustrates a video surveillance system **100** according to an embodiment of the present invention. The system includes at least one video camera **102** arranged to capture video data. The video camera **102** includes a storage device handler **104** configured to record the captured video data directly on a storage device **106.** The system can include a plurality of storage devices. The storage device handler **104** can include a memory storing storage device configuration settings. These settings enable the video camera **102** to know what storage-related functions it can perform, and how it can perform them. For example, the configuration settings can include an identification of a default storage device, or storage location, to which captured video data is stored.

In the embodiment of **FIG. 2****,** the camera **102** is not connected to a central server for recording. The video camera **102,** using the storage device handler **104,** records directly on the storage device **106,** communicating via a local area network (LAN) **108.** The recording can be performed using the security policy of a larger network within which the video surveillance system is integrated. The recording can also be performed using the standard storage devices already provided in the network, without installing any service on the storage. In other words, the storage device(s) **106** can be part of a larger network with which the video surveillance system is being integrated. The video surveillance system according to an embodiment of the present invention views the storage as a folder in which to record video, and no indexing services are installed on the storage.

The storage device handler **104** is able to communicate with existing storage devices without installing specialized software on the storage devices. This can be achieved by mounting the remote disk as an internal disk, by using a remote path (IP) address to refer to the storage each time, or by implementing any suitable protocol such as iSCSI. A configuration tool can be provided to configure the storage device handler **104** for such communication with storage devices.

In known approaches, cameras in video surveillance systems are passive. The camera has an IP address. The server connects to the IP camera, obtains the video from the IP camera, and transfers the video to the storage (either local or network storage). In contrast, according to an embodiment of the present invention, the cameras **102** are active. They are part of the system and have intelligence on board, including server functionality by virtue of the storage device handler. If, for example, one camera malfunctions or breaks, then only that camera is lost. There is no single point of failure in the system.

In known video security infrastructures, manufacturers are trying to increase the number of channels per server. For example, some handle 80, 96, 128 channels per server. However, in all of those cases, the architecture is still server-centric. According to an embodiment of the present invention, there is no central server. The server functionality is distributed. This has an impact on the performance and also on the cost. There is no more need to buy a server-only storage.

An indexer **110** is arranged to query the storage device(s) **106** for new or modified video surveillance information. The indexer **110** is also arranged to index the video surveillance information stored in the storage device(s). Communication between the indexer **110** and the storage device(s) **106** can be performed over the LAN **108.** In an embodiment, one or more secondary indexers can be provided, depending on the desired performance for the system.

Since the storage **106** is treated only as a place to write data according to an embodiment of the present invention, one or more indexers **110** can analyze video, data streams and metadata to create a smart index. This smart index is an ideal data source for business intelligence applications and any kind of data mining application. The indexer **110** is in communication with the storage **106** to index what is on the storage and create a smart index to provide intelligent queries.

The storage can store recorded video, associated metadata (for example, in XML format), and additional camera identification information. The indexer **110** helps to provide a remote user with access to this data provided in a directory in the storage. The indexer 110 can function in a manner similar to spider technology used by internet search engines to find what is new, or modified, on the Internet. The indexer **110** is in communication with the storage device(s) **106** and searches for new or modified video, then indexes the video. For example, the indexer can scan or query the storage device(s) in order to identify and index any new or modified video.

The indexer **110** can create a smart index based on all of the new or modified video surveillance information it finds on the storage. The video surveillance information can include video information, audio only information, meta data, camera information, etc. For example, if a new camera **102** is added to the system, there is no need to configure the network to recognize that there is a new camera. The new camera **102** will write to the storage **106,** and the indexer **110** will acquire all of the information about the camera.

The indexer **110** can include a query frequency setting to specify how often it queries the storage to index new or modified video. The query frequency setting can be predetermined by the indexer based on the number of hosts in the video surveillance network. For example, in a small system, the video storage spider can search or check every 5 seconds to see if there is any new information. The query frequency setting can be set or modified by a user having appropriate permissions.

**FIG. 3** illustrates a simplified view of a video surveillance system showing an example of fault tolerance according to an embodiment of the present invention, such as fault tolerance for the storage. The camera **102** in **FIG. 3** includes video acquisition module **112** in addition to the storage device handler **104,** or embedded storage intelligence module. The storage device handler **104** in **FIG. 3** includes a storage failure detection module **114.** In typical operation, the camera **102** writes directly to a default storage device, or primary storage device, **116.** When the default storage device **116** goes offline (for example, a failure occurs), the storage failure detection module **114** finds an alternative route to another storage location, such as a secondary storage device **118,** also referred to as an alternative storage device.

The storage failure detection module **114** can understand that the media is no longer functioning, and can find an alternative storage in response to an indication that the storage on which it was previously recording has failed. The storage failure detection module **114** in the camera **102** functions in a similar manner to primary and secondary DNS servers used by internet browser software for domain name to IP address translation. Therefore, the camera itself has the intelligence to detect what it has to do in case of a storage failure. This fault tolerance is provided without the need for server redundancy and without the need for an external service to interact with the camera to verify if it is doing what it is intended to do. The storage failure detection module **114** can include an identification of a plurality of alternative storage devices.

The storage failure detection module **114** can point to alternative storage either in parallel to the on-board storage, or upon detection of a fault in the default physical storage. As the camera powers up, when the storage device handler **104** is part of the camera, it can begin writing data by itself. In case of failure in the storage, the camera can automatically switch to an alternative storage.

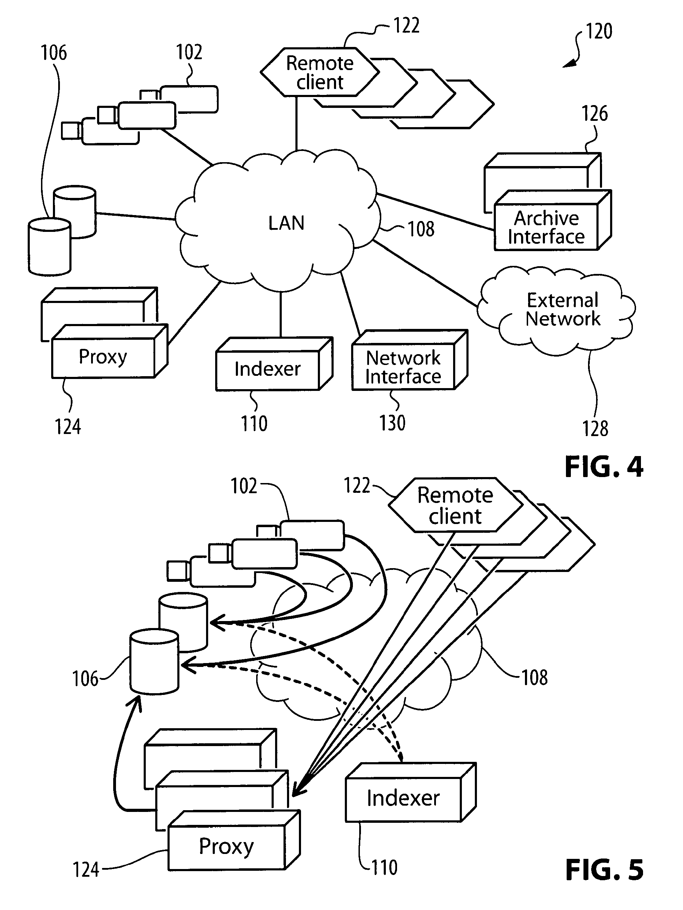

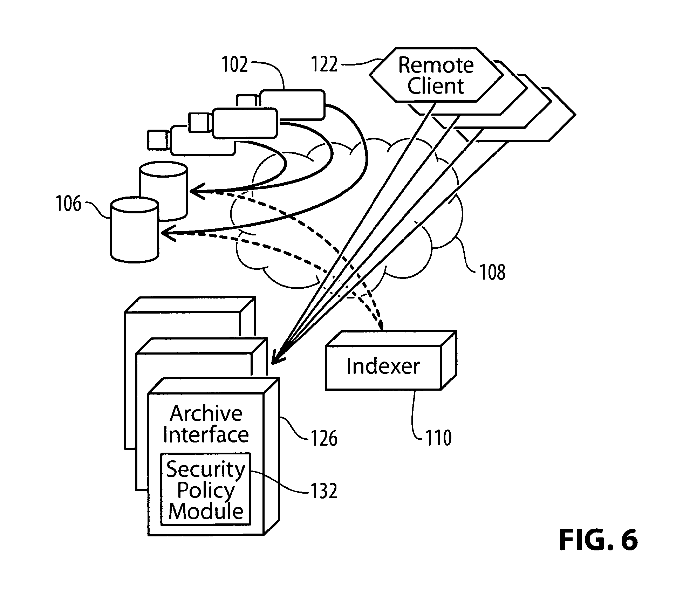

**FIG. 4** illustrates a block diagram of a video surveillance network **120** according to an embodiment of the present invention. The indexer **110** can receive and interpret video surveillance requests from a remote client **122.** A proxy **124** can manage responses to requests for live and/or stored video. An archive interface **126** is arranged to provide access to stored video in the storage device. The operation of the proxy **124** and the archive interface 126 will be described in further detail in relation to **FIGS. 5** and **6****.**

If connection to an external network **128** is desired, a network interface **130** is provided that will be like the gateway of a network. The network interface **130** is a single point of connection between two different networks. For example, video surveillance networks at two different airports can communicate with each other via their network interfaces.

**FIG. 5** illustrates a live view example according to an embodiment of the present invention. A "live view" can include accessing video in real-time, or near real-time, from a camera. When a remote client **122** wants to see a live video, the client accesses the indexer 110, which works similar to a DNS. A remote client request to an indexer can include a request regarding how to obtain the requested video stream. The indexer will then give to the client the location of the camera **102** associated with the requested video steam. If the associated camera is in a small network, the client can connect directly to the camera.

If the associated camera is in a large infrastructure, the indexer **110** can provide the remote client with the reference of a proxy **124** that is reflecting that stream. The client can then connect to the proxy **124,** which will proxy the video stream and start transmitting the video to the client. For a live view of what the camera is observing, the proxy 124 gets the video from the camera **102** and sends it to the client **122** in real time.

In this way, there is no need for the client **122** to connect directly to the camera 102, since only the proxy **124** does. The same proxy can serve a plurality of clients providing them with the same stream. If a number of clients want to see the same video, there will be just one connection from the proxy to the camera, and many connections from the proxy to the client, as shown in **FIG. 5****.** This can be described as multi-unicasting, instead of multicasting. This permits simultaneous viewing of the same video stream using limited bandwidth.

**FIG. 6** illustrates a video playback example according to an embodiment of the present invention. The method for obtaining recorded video footage is similar to the method of obtaining live video described in relation to **FIG. 5****.** In the case of **FIG. 6****,** a remote client **122** connects to the indexer **110.** The indexer **110** directs the requesting client **122** to an archive interface **126** by providing the reference of the archive interface that is mapping the requested video. The client then receives the images from the proper archive interface, similar to streaming through the proxy in **FIG. 5****.**

The archive interface **126** can include a security policy module **132** arranged to enforce security policies with respect to requests for stored video stored on the storage 106. For example, certain users may not be permitted to access certain cameras, or certain cameras at certain times. The security policy module **132** is provided between the client and the video to enable security policies.

The embodiments described in relation to **FIGS. 2** to **6** have been described in relation to a video surveillance system including one or more video cameras **102.** The video cameras have been described as having on-board functionality previously provided in a centralized server. Therefore, embodiments of the present invention do not need a central server. One manner in which these embodiments can be implemented will be described in further detail below.

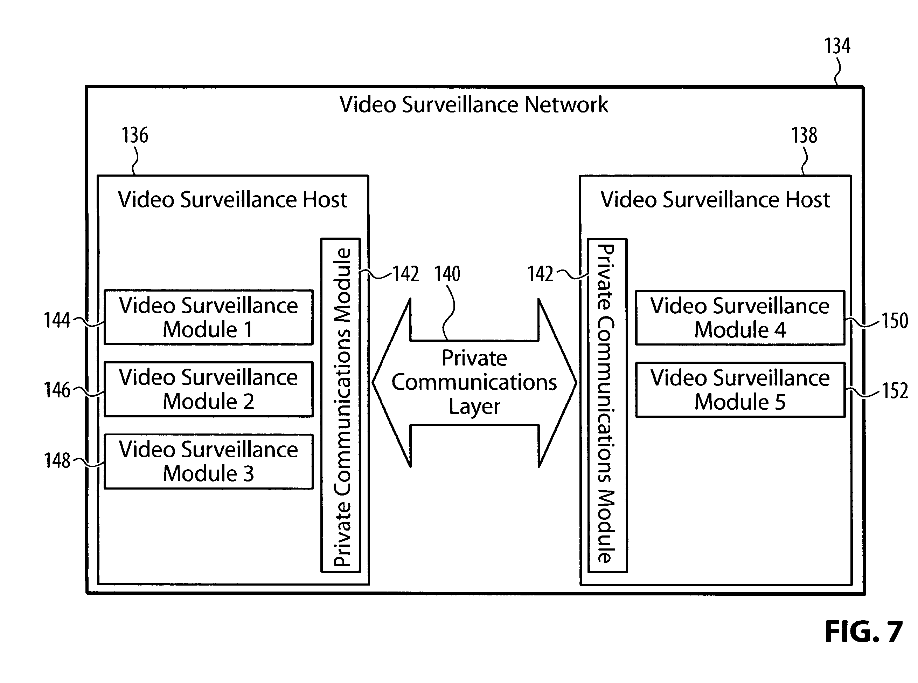

**FIG. 7** is a block diagram illustrating an architecture of a video surveillance system (or network) **134** according to an embodiment of the present invention. The video surveillance network **134** includes a plurality of hosts. The term "host" is used herein to identify any network device (or edge device inside the network) that uses the framework to communicate with the other devices of the surveillance system within the environment. The host can run one or more services, also known as modules, to implement specific functionality. The hosts can include a camera, an analytics gateway, an encoder, an access control device. As long as a device can communicate with another device in the virtual network, or virtual sub-domain, it is considered a host.

Two video surveillance hosts **106** and **108** and their video surveillance modules are shown in **FIG. 7****.** Other embodiments of the video surveillance network **134** can include any number of video surveillance hosts. The video surveillance hosts **106** and **108** are in communication with one another via a private communications layer **140** to form a virtual video surveillance network within a larger physical network (not shown). Communication over the private communications layer **140** is performed using a private communications module **142** provided in each video surveillance host. Sockets, pipes, or other operating system functions can be used to perform this communication.

The private communication layer **140** makes all of the devices part of the same environment. This private communication layer can be considered as part of a framework that allows services, devices and system processes to communicate with each other in the same easy and transparent way. The framework distributes the server in many different edge devices in the network.

In an embodiment, the private communications module **142** can be provided as part of a video surveillance module. The private communications layer can be provided in a TCP/IP network, and can reside on top of the TCP layer. The larger physical network can be an existing network with which the video surveillance system is to be integrated, such as a network at an airport, hotel chain, financial institution, retail outlet or chain, government institution, etc.

Each of the plurality of video surveillance hosts includes at least one video surveillance module and the private communications module. As shown in **FIG. 7****,** the video surveillance host **136** includes three video surveillance modules **144, 146** and **148.** The video surveillance host **108** includes two video surveillance modules 150 and **152.**

For example, host **138** can be of the type "camera" and can run at least two modules: an acquisition module, and a video streaming module. If the camera host also runs an archiving module, the camera will also be able to write its stream to external (or internal) storage. This allows the system to be transparent and modular.

The video surveillance modules in the plurality of video surveillance hosts together form a distributed video surveillance server. In this way, the video surveillance server functionality can be split among a number of elements, permitting more channels in the system and eliminating a single point of failure or congestion that is inherent in a system having a central video surveillance server.

Suppose one host performs video capture and video compression processes, and another host performs analytics processes. The two sets of processes can communicate over TCP/IP. This creates an architecture that is good for small installations and for large installations.

While known approaches have a centralized server, embodiments of the present invention provide distributed video surveillance server functionality. In an embodiment, the server modules can be generally evenly distributed, for example having a camera with just video decoding and video compression, analytics at another node and archiving at a further node. Where the system is small and has only one camera, an advantage of an architecture according to another embodiment of the present invention is that the camera can be the whole server, simply by loading all of the modules on the camera without distributing them. The camera will then be self-sufficient.

With reference to the embodiment in **FIG. 7****,** the modules in the video surveillance host **136** can be different from the modules in the video surveillance host **138,** or there can be overlap in the modules contained in different hosts in the system. This is particularly common if the hosts are of the same type, such as two cameras. For example, a first video surveillance host of the type camera can include an acquisition module and a video streaming module as the video surveillance server modules. A second video surveillance host of the type camera can include an acquisition module, a video streaming module, and an archiving module.

The video surveillance server modules are the active part of the system. A real resource object can be created by instantiating a module in the host. The modules use the framework, or private communications layer, to communicate with one another. Exemplary modules that can be used according to embodiments of the present invention include: a network device management module; a video (audio) source management module; a storage and archive (physical and logical data writing) management and creation module; an alarm and auxiliary connector manager; a dome piloting to presets module; a record and display tours module; a data index creation module (for fast-find purposes); a video proxy creation module to distribute live and playback video; and a distributed analytics engine creator module.

One of the drawbacks of known video analytics approaches is that analytics are very "heavy", or resource intensive. This makes it difficult to perform analytics on cameras that do not have analytics capabilities, since the video must be acquired from the camera, decoded, and then analyzed. Existing solutions are limited by the number of channels. In an architecture according to an embodiment of the present invention, the video surveillance system is unlimited with respect to channel numbers because it can be distributed on a parallel batch of processors. One server, which is a host of the system, can have eight processors analyzing 20 streams, another server with 2 processors and 5 streams, etc. The whole system is seen as one global environment.

Using such a system, there is no need to change the core or the server to add new functionality, such as a specific feature for a particular customer. A new service or module can be created and added to a host.

In an embodiment, each of the video surveillance hosts can be assigned a virtual network identifier, such as a specialized TCP/IP address. This identifier can be different from an identifier used on the larger network within which the video surveillance system is integrated, or can be unique within a virtual network. The private communications modules **142** in each of the plurality of video surveillance hosts can address one another over the private communications layer **140** using the virtual network identifiers. A host belonging to more than one virtual network can be assigned a unique virtual network identifier for each virtual network.

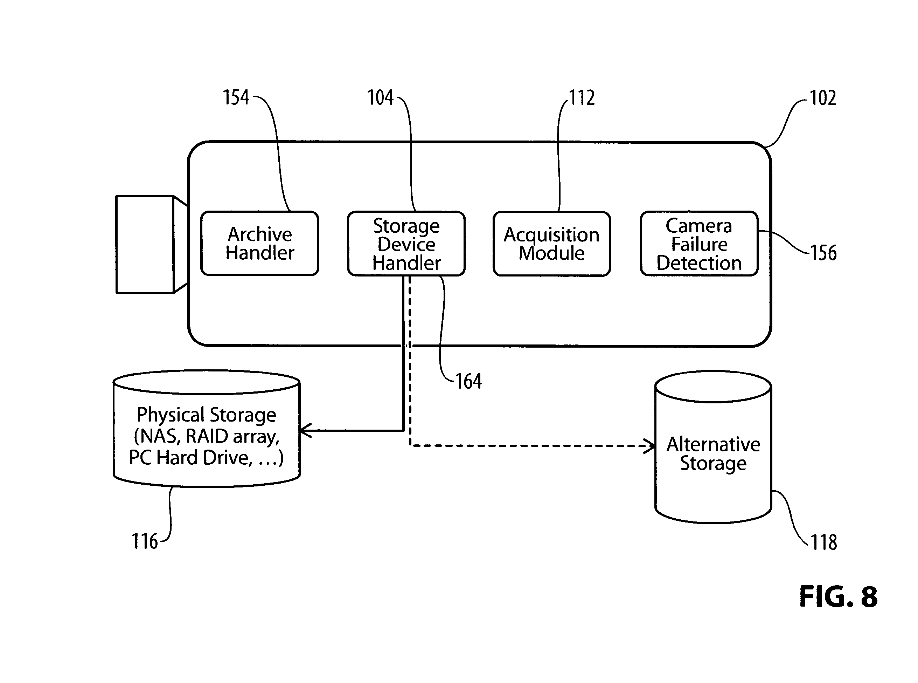

**FIG. 8** illustrates details of a video camera including a plurality of video surveillance modules according to an embodiment of the present invention. The video camera **102** of **FIG. 8** is a video surveillance host as described in the context of the video surveillance architecture of **FIG. 7****.** The video camera **102** includes a plurality of video surveillance modules, including a storage device handler **104,** which is in communication with storage resources such as a default storage device **116** and a secondary storage device **118.** The video camera **102** also includes an acquisition module **112,** or network device handler, which is in communication with video stream resources to acquire video data.

The video camera **102** in **FIG. 8** includes an archive handler **154.** The archive handler **154** is a video surveillance module that can be provided on any host in the network, which provides functionality similar to the archive interface **126** described in relation to **FIGS. 4** and **6****.** This is in contrast to the embodiment of **FIG. 6****,** where the archive interface **138** is provided as a separate element or host. The flexibility of providing distributed server functionality in a plurality of video surveillance hosts is that functionality normally provided in standalone devices can be integrated with existing devices enabled to load new modules. In a similar manner, the functionality of the proxy **124** can be provided as a proxy module, which is a video surveillance module that can be provided on any host in the network.

With respect to the indexer **110,** it can be provided as a video surveillance module that can be provided on a host, for example if the network only has one host. When the network includes a plurality of hosts, providing the indexer as an element separate from a camera gives the indexer global visibility of the network. It can be advantageous to have every camera be independent, such that it does not know (or does not need to know) if there are other cameras in the network.

In the embodiment of **FIG. 8****,** the video camera **102** includes a camera failure detection module **156** to detect if a camera in the network has a failure. The camera failure detection module **156** can be implemented as a policy in the network, such as a simple network management protocol (SNMP) connecting all devices in the network to detect if a device goes down or fails. As such, a server module in one camera in the video surveillance network according to an embodiment of the present invention can detect failure of another camera. Since embodiments of the present invention provide server functionality without a central server, there is no single point of failure in this system. It can be advantageous to detect failures in a host in the network, even if the failure of a single camera does not need to affect the functioning of the rest of the network.

While **FIG. 8** has been described in relation to a camera failure detection module **156,** in some situations it can be advantageous to detect whether a particular video surveillance module in a video surveillance host has failed, rather than simply detecting if an entire camera or host has failed. Therefore, in another embodiment, a video surveillance module failure detector can be provided to detect failure of a video surveillance module within a video surveillance host. The failure can be detected in response to a failure notice received from the failed module prior to its failure, or in response to a failed operation that included the video surveillance module. Additional logic can be provided in the case of a failed operation to specify which module is most likely to have been the cause of the failure of the operation.

In an aspect, the present invention provides a video surveillance system including a plurality of video surveillance hosts in communication with one another via a private communications layer to form a virtual video surveillance network within a larger physical network. Each of the plurality of video surveillance hosts includes a private communications module facilitating communication over the private communications layer. Each of the plurality of video surveillance hosts further includes at least one video surveillance module. The video surveillance modules in the plurality of video surveillance hosts together form a distributed video surveillance server.

In an embodiment, the plurality of video surveillance hosts can include: a camera arranged to capture video data; a storage device arranged to store video data captured by the camera; and an indexer arranged to query the storage device for new or modified video surveillance information and arranged to index the video surveillance information stored in the storage device. The video surveillance information can include video, video information, meta data, or camera information.

The camera can include an acquisition module and a video streaming module. The camera can further include an archiving module, or can include a storage failure detection module arranged to find an alternative storage location in response to an indication that a default storage location has failed.

An archive interface can provide access to stored video in the storage device. The archive interface can include a security policy module arranged to enforce security policies with respect to requests for stored video stored on the storage.

A proxy can manage responses to requests for live and/or stored video. A network interface can be provided in communication with, and providing a single point of connection to, at least one other video surveillance network. A video surveillance module failure detector can detect failure of an external video surveillance module within another video surveillance host.

Each of the plurality of video surveillance hosts can include a virtual network identifier. The private communications modules can address one another over the private communications layer using the virtual network identifiers. The private communication layer can be provided in a TCP/IP network. The larger physical network with which the video surveillance system is to be integrated can be an existing network infrastructure, such as a managed IT network at a financial institution, retail store or chain, government institution, etc.

In another aspect, the present invention provides a computer-readable medium storing statements and instructions for execution by a processor to provide a video surveillance host as part of a video surveillance system. Code means on the computer-readable medium is arranged to provide a private communications module facilitating communication with one or more other video surveillance hosts over a private communications layer to form a virtual video surveillance network within a larger physical network. Further code means on the computer-readable medium is arranged to provide at least one video surveillance module, the at least one video surveillance module in the video surveillance host cooperating with further video surveillance modules in the one or more other video surveillance hosts to together form a distributed video surveillance server.

In the preceding description, for purposes of explanation, numerous details are set forth in order to provide a thorough understanding of the embodiments of the invention. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

Embodiments of the invention can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A video surveillance system comprising:
at least one video camera arranged to capture video data, the video camera including a storage device handler configured to record the captured video data directly on a storage device; and
an indexer arranged to query the storage device for new or modified video surveillance information and arranged to index the video surveillance information stored in the storage device.

2. The video surveillance system of claim 1 wherein the at least one video camera comprises a plurality of video cameras, each of the plurality of video cameras including at least one video surveillance module, the video surveillance modules in the plurality of video cameras together forming a distributed video surveillance server.

3. The video surveillance system of claim 2 wherein each of the plurality of video cameras comprises a private communications module facilitating communication between the plurality of video cameras over a private communications layer to form a virtual video surveillance network within a larger physical network.

4. The video surveillance system of claim 3 wherein each of the plurality of video surveillance hosts includes a virtual network identifier, and the private communications modules address one another over the private communications layer using the virtual network identifiers.

5. The video surveillance system of claim 3 or claim 4 wherein the larger physical network comprises an existing network infrastructure with which the video surveillance system is to be integrated.

6. The video surveillance system of any one of claims 2 to 5 wherein the at least one video surveillance module comprises a video surveillance module failure detector arranged to detect failure of an external video surveillance module within another video surveillance host.

7. The video surveillance system of any one of claims 1 to 6 wherein the storage device handler comprises storage device configuration settings.

8. The video surveillance system of any one of claims 1 to 7 wherein the storage device handler comprises a storage failure detection module arranged to configure the at least one video camera to record captured video data to a secondary storage device in response to an indication that a default storage device has failed.

9. The video surveillance system of any one of claims 1 to 8 further comprising a secondary indexer arranged to query the storage device for new or modified video surveillance information and arranged to index the video surveillance information stored in the storage device in response to an indication that the indexer has failed.

10. The video surveillance system of any one of claims 1 to 9 further comprising the storage device on which the at least one video stream source is configured to record video data.

11. The video surveillance system of any one of claims 1 to 10 further comprising an archive interface arranged to provide access to stored video in the storage device.

12. The video surveillance system of claim 11 wherein the archive interface comprises a security policy module arranged to enforce security policies with respect to requests for stored video stored on the storage.

13. The video surveillance system of any one of claims 1 to 12 further comprising a proxy arranged to manage responses to requests for live and/or stored video.

14. The video surveillance system of any one of claims 1 to 13 further comprising a network interface in communication with and providing a single point of connection to at least one other video surveillance network.

15. The video surveillance system of any one of claims 1 to 14 wherein the video surveillance information comprises video, video information, meta data, or camera information.
